# EUROPÄISCHE PATENTSCHRIFT

(11) **EP 2 161 472 B1**
(45) Veröffentlichungstag und Bekanntmachung des Hinweises auf die Patenterteilung: **30.11.2016**
(21) Anmeldenummer: 09007737.1
(22) Anmeldetag: 12.06.2009
(51) Int. Cl.: F16D 65/14, F16D 65/18

(54) **Bremseinrichtung**
Braking device
Dispositif de freinage

(30) Priorität: 06.09.2008 DE 102008046157
(43) Veröffentlichungstag der Anmeldung: 10.03.2010
(73) Patentinhaber: WABCO GmbH, 30453 Hannover (DE)
(72) Erfinder: Beier, Peter, 31515 Wunstorf (DE); Bruns, Gerhard, 30451 Hannover (DE); Jantz, Olaf, 30451 Hannover (DE); Rosendahl, Hartmut, 30167 Hannover (DE)
(74) Vertreter: Lauerwald, Jörg

(56) Entgegenhaltungen:
- DE-A1- 3 423 875
- DE-A1-102005 030 620
- DE-A1-102005 052 689

## Beschreibung

Die Erfindung betrifft eine Bremseinrichtung gemäß dem Oberbegriff von Anspruch 1. Eine derartige Bremseinrichtung weist einen Zuspannkörper auf, mittels welchem ein Bremsbelag gegen einen Rotationskörper bzw. eine Bremsscheibe zuspannbar ist. Darüber hinaus weist die Bremseinrichtung eine Kurbel auf, welche um eine Kurbeldrehachse drehbar gelagert ist. Ein Zapfen ist zumindest abschnittsweise rotationssymmetrisch um eine Zapfenmittelachse ausgebildet, wobei die Zapfenmittelachse in einem konstanten Abstand parallel und exzentrisch versetzt zur Kurbeldrehachse angeordnet ist. Die Bremseinrichtung weist einen Aktuator auf, mittels dessen ein Drehmoment der Kurbel erzeugbar ist. In Erwiderung auf dieses Drehmoment ist mittels des Zapfens eine Betätigungskraft zum Zuspannen des Bremsbelags bereitstellbar.

Eine derartige Bremseinrichtung ist bspw. aus DE 10 2005 030 620 A1 bekannt, welche eine Scheibenbremse in selbstverstärkender Bauart zeigt. Ein Elektromotor als Aktuator dreht die Kurbel, welche den Zapfen aufweist. Der Zapfen greift in eine Öffnung einer Druckplatte bzw. des Zuspannkörpers ein. Die Öffnung ist hierbei kulissenartig, vorzugsweise als Langloch, ausgebildet. Mittels des Zapfens und der Öffnung wird aus einer Drehung der Kurbel eine translatorische Bewegung des Zuspannkörpers erzeugt. Diese translatorische Bewegung entspricht einer Bewegungskomponente des Zapfens bzw. der Zapfenmittelachse in einer Translationsrichtung senkrecht zur Kurbeldrehachse. Mit einer zweiten Bewegungskomponente senkrecht zur Kurbeldrehachse und senkrecht zur Translationsrichtung verschiebt sich der Zapfen in der Öffnung. Der Zapfen reibt somit an einem Rand der Öffnung entlang, wobei der Zapfen und dieser Rand der Öffnung nur einen kleinen Kontaktbereich aufweisen können.

Zwischen dem Zapfen und der Öffnung wirken hohe Kräfte, insbesondere in der Translationsrichtung. Die bekannte Bremseinrichtung gemäß DE 10 2005 030 620 A1 weist deshalb des Nachteil auf, dass diese hohen Kräfte lediglich in dem kleinen Kontaktbereich zwischen dem Zapfen und dem Rand der Öffnung bzw. dem Zuspannkörper übertragen werden können und der Zapfen hierbei an dem Rand der Öffnung entlang reibt. Hierdurch werden der Zapfen und der Zuspannkörper stark beansprucht und verschlissen, wodurch eine Lebensdauer der Bremseinrichtung herabgesetzt wird.

Der Erfindung liegt deshalb das Problem zugrunde, eine Kraftübertragung von dem Zapfen auf den Zuspannkörper zu verbessern.

Die Erfindung löst dieses Problem mit dem Kennzeichen von Anspruch 1 bzw. 2. Die erfindungsgemäße Bremseinrichtung weist nämlich einen Ausgleichsexzenter auf, welcher um eine Ausgleichsexzenterdrehachse drehbar in dem Zuspannkörper gelagert ist. Die Ausgleichsexzenterdrehachse ist in einem konstanten Abstand parallel und exzentrisch versetzt zur Zapfenmittelachse angeordnet.

Die Erfindung ermöglicht eine einfache und stabile Lagerung des Zapfens. Der Zapfen muss sich nämlich nicht in einer kulissenartigen Öffnung verschieben bzw. in einem kleinen Kontaktbereich an einem Rand dieser Öffnung entlang reiben. Die Zapfenmittelachse behält auch im Falle einer Drehung der Kurbel ihren Abstand zur Ausgleichsexzenterdrehachse bei. Die Drehung des Ausgleichsexzenters um die Ausgleichsexzenterdrehachse kompensiert die Auslenkung des Zapfens in der Richtung senkrecht zur Translationsrichtung und senkrecht zur Kurbeldrehachse. Die Kurbel, der Zapfen und der Ausgleichsexzenter können deshalb alle einfache, insbesondere zylindrische, Lager aufweisen.

Die Bremseinrichtung ist hierbei bevorzugt eine Scheibenbremse, welche eine Bremsscheibe als Rotationskörper aufweist, gegen welche der Bremsbelag zuspannbar ist. Das Zuspannen erfolgt hierbei vorzugsweise in einer Zuspannrichtung, welche parallel zu einer Drehachse der Bremsscheibe weist.

Ggf. kann die Bremseinrichtung jedoch auch andersartig, bspw. als Trommelbremse ausgebildet sein. Der Rotationskörper ist in diesem Fall das Gehäuse der Trommelbremse, gegen welches der Bremsbelag bzw. zwei Bremsbeläge in gegensätzlicher Orientierung in einer Richtung senkrecht zu einer Drehachse des Gehäuses zuspannen.

Der Aktuator der Bremseinrichtung ist vorzugsweise ein elektrischer Aktuator, bspw. ein Elektromotor. Der Elektromotor treibt die Kurbel vorzugsweise über ein Untersetzungsgetriebe an, wodurch eine kraftvolle und exakte bzw. feinstufige Betätigung der Bremseinrichtung ermöglicht wird. Alternativ kann jedoch auch ein druckmittelbetriebener Aktuator, bspw. ein druckluftbetriebener Aktuator vorgesehen werden.

Vorzugsweise ist der Ausgleichsexzenter derart in dem Zuspannkörper gelagert, dass eine Auslenkung dieses Zuspannkörpers in der senkrecht zur Ausgleichsexzenterdrehachse weisenden Translationsrichtung mit einer betragsgleichen, richtungsgleichen und orientierungsgleichen Auslenkung der Ausgleichsexzenterdrehachse einhergeht. Der Ausgleichsexzenter ist hierbei derart führbar gelagert, dass er in der Translationsrichtung und ggf. ganz oder teilweise in Richtung der Ausgleichsexzenterdrehachse, nicht jedoch in einer senkrecht zur Translationsrichtung und senkrecht zur Ausgleichsexzenterdrehachse weisenden Richtung auslenkbar ist. Die Erfindung erreicht hierdurch eine einfache Lagerung des Ausgleichsexzenters und in Verbindung mit der Drehung des Ausgleichsexzenters in Erwiderung auf eine Auslenkung des Zapfens senkrecht zur Translationsrichtung eine zusätzliche Auslenkung des Zuspannkörpers in der Translationsrichtung.

Es wird ein "Kniehebeleffekt" erzielt, wobei der Ausgleichsexzenter eine vorteilhafte zusätzliche Untersetzung ermöglicht. Bei geeigneter Anordnung der Zapfenmittelachse relativ zur Kurbeldrehachse und Ausgleichsexzenterdrehachse ist eine Auslenkung des Zuspannkörpers in der Translationsrichtung nämlich geringer als die Auslenkung des Zapfens in dieser Translationsrichtung. Darüber hinaus führt eine Drehung der Kurbel um einen kleinen Winkel zunächst zu einer vergleichsweise großen Auslenkung des Zuspannkörpers, während eine weitere Drehung um den gleichen Drehwinkel zu einer vergleichsweise kleineren Auslenkung des Zuspannkörpers in der Translationsrichtung führt, wobei jedoch ein maximaler Drehwinkel nicht überschritten werden sollte.

Bevorzugt weist der Ausgleichsexzenter ein exzentrisch zur Ausgleichsexzenterdrehachse angeordnetes und rotationssymmetrisch um die Zapfenmittelachse ausgebildetes Loch oder Sackloch auf. Der Zapfen ist hierbei um die Zapfenmittelachse gegenüber dem Ausgleichsexzenter drehbar in diesem Loch bzw. Sackloch gelagert. Hierdurch ergibt sich eine einfache, effektive und materialschonende Lagerung des Zapfens, bspw. in einem Kugeldrehlager. Ggf. ist der Zapfen, insbesondere stoffschlüssig, mit der Kurbel verbunden, kann jedoch alternativ auch in der Kurbel gelagert sein.

Zusätzlich oder alternativ weist die Kurbel ein exzentrisch zur Kurbeldrehachse angeordnetes und rotationssymmetrisch um die Zapfenmittelachse ausgebildetes Loch oder Sackloch auf, wobei der Zapfen um die Zapfenmittelachse gegenüber der Kurbel drehbar in diesem Loch bzw. Sackloch gelagert ist. Hierbei ergeben sich die Vorteile einer einfachen und effektiven Lagerung für den nicht fest, insbesondere stoffschlüssig, mit der Kurbel verbundenen Zapfen. Der Zapfen kann hierbei ggf., insbesondere stoffschlüssig, mit dem Ausgleichsexzenter verbunden sein, falls er nicht, bspw. in dem ggf. vorhandenen Loch des Ausgleichsexzenters drehbar gelagert ist.

Bevorzugt weisen die Kurbel, der Zapfen und/oder der Ausgleichsexzenter jeweils zumindest abschnittsweise eine zylinderartige Kontur auf und sind jeweils in einem Lager gelagert, welches eine korrespondierende zylinderartige Kontur aufweist. Hierdurch ist eine optimale reibungsarme und materialschonende Kraftübertragung zwischen dem Zapfen und der Kurbel bzw. dem Ausgleichsexzenter bzw. zwischen dem Ausgleichsexzenter und dem Zuspannkörper bzw. eine vorteilhafte Lagerung der Kurbel möglich.

In einer besonders vorteilhaften Ausbildung der Erfindung weist die Bremseinrichtung eine erste Verbindungsstrecke, welche senkrecht zur Zapfenmittelachse angeordnet ist und einen auf der Zapfenmittelachse angeordneten Zapfenmittelpunkt der Kurbelachse mit der Kurbeldrehachse verbindet, zwischen 80% und 125% der Länge einer zweiten Verbindungsstrecke, welche senkrecht zur Zapfenmittelachse angeordnet ist und den Zapfenmittelpunkt mit der Ausgleichsexzenterdrehachse verbindet, auf. Insbesondere weisen die erste Verbindungsstrecke und die zweite Verbindungsstrecke eine im Wesentlichen gleiche Länge auf. Hierdurch ist eine besonders vorteilhafte Untersetzung mittels des "Kniehebeleffekts" möglich.

Besonders bevorzugt sind die Kurbel, der Zapfen und der Ausgleichsexzenter der Bremseinrichtung derart angeordnet, dass der Bremsbelag in einer ersten Auslenkposition des Zuspannkörpers maximal zuspannbar ist, wobei die erste Verbindungsstrecke und die zweite Verbindungsstrecke im Zapfenmittelpunkt einen stumpfen oder gestreckten Öffnungswinkel, insbesondere zwischen 150° und 180°, bevorzugt zwischen 170° und 180° und besonders bevorzugt von im Wesentlichen 180°, begrenzen. Die erste Auslenkposition des Zuspannkörpers ist hierbei eine maximale Auslenkung des Zuspannkörpers in der Translationsrichtung in einer ersten Orientierung bzw. kommt dieser maximalen Auslenkung nahe. Ein weiteres Auslenken des Zapfens würde hingegen zu einem überstumpfen Öffnungswinkel und zu einer wieder geringeren Auslenkung des Zuspannkörpers in der Translationsrichtung führen. Somit wird mit der erfindungsgemäßen Anordnung der Kurbel, des Zapfens und des Ausgleichsexzenters ein maximal oder nahezu maximal möglicher Drehwinkel der Kurbel und folglich eine maximal mögliche Untersetzung zum Zuspannen des Bremsbelags ermöglicht.

In einer vorteilhaften Weiterbildung sind die Kurbel, der Zapfen und der Ausgleichsexzenter derart angeordnet, dass der Zuspannkörper bezogen auf eigene Auslenkungen in der Translationsrichtung eine Mittelposition aufweist, in welcher der Bremsbelag nicht bzw. minimal zuspannbar ist, wobei die erste Verbindungsstrecke und die zweite Verbindungsstrecke im Zapfenmittelpunkt einen im Wesentlichen rechten Öffnungswinkel begrenzen, wobei die erste Verbindungsstrecke im Wesentlichen senkrecht zur Translationsrichtung und im Wesentlichen senkrecht zur Kurbeldrehachse angeordnet ist und wobei die zweite Verbindungsstrecke im Wesentlichen parallel zur Translationsrichtung und senkrecht zur Kurbeldrehachse angeordnet ist. Diese Anordnung führt zu einer besonders vorteilhaften Untersetzung, welche mit zunehmender Auslenkung in Richtung der ersten Auslenkposition ein größer werdendes Untersetzungsverhältnis von der Drehung der Kurbel zur Auslenkung des Zuspannkörpers aufweist.

In einer Weiterbildung der Erfindung sind die Kurbel, der Zapfen und der Ausgleichsexzenter derart angeordnet, dass der Bremsbelag in einer zweiten Auslenkposition des Zuspannkörpers maximal zuspannbar ist, wobei die erste Verbindungsstrecke und die zweite Verbindungsstrecke im Zapfenmittelpunkt einen spitzen Öffnungswinkel, insbesondere zwischen 50° und 80°, begrenzen und wobei die erste Auslenkposition durch Auslenkung mit der ersten Orientierung und die zweite Auslenkposition durch Auslenkung mit einer der ersten Orientierung entgegengesetzten zweiten Orientierung von der Mittelposition entlang der Translationsrichtung erreichbar sind. Somit ist der Bremsbelag in zwei Auslenkpositionen zuspannbar, welche jedoch durch Auslenkung in entgegengesetzter Orientierung und mit einer unterschiedlichen Untersetzung von Kräften erreicht werden. Die erste Auslenkposition kann hierbei zum Abbremsen aus einer Vorwärtsfahrt und die zweite Auslenkposition zum Abbremsen aus einer Rückwärtsfahrt verwendet werden. In einer Rückwärtsfahrt werden nämlich in der Regel im Gegensatz zur Vorwärtsfahrt vergleichsweise geringe Geschwindigkeiten erreicht, so dass an ein Bremsverhalten aus Vorwärtsfahrt und aus Rückwärtsfahrt unterschiedliche Anforderungen zu stellen sind, insbesondere das Untersetzungsverhältnis unterschiedlich sein kann.

In einer besonders bevorzugten Ausbildung der Erfindung ist die Bremseinrichtung selbstverstärkend ausgebildet, wobei die Bremseinrichtung wenigstens ein Widerlager und wenigstens eine Ausnehmung mit einer rampenartigen Kontur auf einer dem Widerlager zugewandten Seite des Zuspannkörpers aufweist. Das Widerlager und die Ausnehmung sind hierbei derart, insbesondere relativ zueinander, angeordnet, dass in Erwiderung auf eine Auslenkung des Zuspannkörpers in der Translationsrichtung ausgehend von der Mittelposition eine Auslenkung dieses Zuspannkörpers in einer Richtung parallel zur Ausgleichsexzenterdrehachse herbeigeführt wird. Hierbei schiebt sich der Zuspannkörper mit der Ausnehmung bzw. der rampenartigen Kontur über das Widerlager und spannt den Bremsbelag gegen den Rotationskörper zu. Die kinetische Energie eines die Bremseinrichtung aufweisenden Fahrzeugs bzw. eine Rotationsenergie des Rotationskörpers wird hierbei unterstützend zum Zuspannen des Bremsbelags verwendet. Der Bremsbelag reibt nämlich an dem Rotationskörper und wird hierbei zusammen mit dem Zuspannkörper in der Translationsrichtung ausgelenkt und mittels der rampenartigen Kontur über das Widerlager gegen den Rotationskörper gedrückt, wobei der Bremsbelag weiter gegen den Rotationskörper zugespannt wird.

Die Ausnehmung des Zuspannkörpers kann hierbei zum Zuspannen des Bremsbelags aus der Vorwärtsfahrt und aus der Rückwärtsfahrt beidseitig des Widerlagers rampenartig ausgebildet sein. Die rampenartige Kontur kann abschnittsweise gerade oder auch gekrümmt sein. Insbesondere ist die rampenartige Kontur der Ausnehmung an ein gewünschtes Untersetzungsverhältnis einer jeweiligen Auslenkung in der Translationsrichtung angepasst. Die Kontur kann für ein Zuspannen aus einer Vorwärtsfahrt und für ein Zuspannen des Bremsbelags aus einer Rückwärtsfahrt eine unterschiedliche Krümmung aufweisen.

Bevorzugt weist das Widerlager wenigstens eine Lagerkugel oder eine Lagerrolle auf, welche auf einer dem Zuspannkörper abgewandten Seite der Lagerkugel bzw. Lagerrolle in einer weiteren Aussparung mit einer weiteren rampenartigen, insbesondere der Kontur der Lagerkugel bzw. Lagerrolle angepassten, Kontur gelagert ist. Die Lagerrolle kann hierbei ein massiver Zylinder bzw. ggf. auch ein Hohlzylinder sein. Über die Kugel bzw. Lagerrolle kann der Zuspannkörper vorteilhaft geschoben werden, da sich die Kugel bzw. Lagerrolle in der weiteren rampenartigen Kontur drehen kann.

In einer Weiterbildung der Erfindung weist die Bremseinrichtung eine Nachstelleinrichtung auf, welche wenigstens ein Nachstellmittel aufweist, mittels dessen das Widerlager relativ zu Kurbel in einer parallel zur Kurbeldrehachse weisenden Richtung verschiebbar ist. Die Nachstelleinrichtung kann ein automatisches und/oder manuelles Verschieben des Widerlagers ermöglichen. Insbesondere kann bspw. automatisch ermittelt werden, dass bspw. nach einem Bremsbelagverschleiß die erste bzw. zweite Auslenkposition einer maximal möglichen bzw. vorgegebenen Auslenkposition nahe kommt. In Erwiderung hierauf kann das Widerlager automatisch in Richtung des Bremsbelags bzw. in Richtung des Rotationskörpers verschoben werden.

Das Nachstellmittel kann hierbei bspw. ein Innengewinde aufweisen und ringsum die Kurbel angeordnet sein, wobei bspw. die Kurbel ein Außengewinde aufweisen kann. Durch manuelles oder bspw. mittels eines Aktuators, insbesondere Elektromotors, bewirkten Drehens des Nachstellmittels verschiebt sich das Nachstellmittel in einer parallel zur Kurbeldrehachse weisenden Richtung und verschiebt mittelbar oder unmittelbar auch das Widerlager.

In einer bevorzugten Weiterbildung weist die Bremseinrichtung eine vom Aktuator, insbesondere Elektromotor, antreibbare Antriebswelle auf, mittels der direkt oder über ein zwischengeschaltetes Untersetzungsgetriebe die Kurbel antreibbar bzw. das Drehmoment der Kurbel erzeugbar ist. Der Aktuator kann somit an einer vorteilhaften Position angeordnet sein, wobei ein Drehmoment der Antriebswelle erzeugbar und hierüber das Drehmoment der Kurbel erzeugbar ist. Ggf. kann ein Aktuator für mehrere Scheibenbremseinrichtungen vorgesehen sein. Bspw. kann ein Elektromotor über eine oder mehrere Antriebswellen Kurbeln von Scheibenbremseinrichtungen an einer linken Seite und an einer rechten Seite eines Fahrzeugs bzw. einer Fahrzeugachse antreiben.

Weitere Ausführungsformen ergeben sich aus den Ansprüchen sowie aus den anhand der Zeichnung näher erläuterten Ausführungsbeispielen. In der Zeichnung zeigen:
- Fig. 1: einen Schnitt einer Bremseinrichtung gemäß einem ersten Ausführungsbeispiel der Erfindung;
- Fig. 2: Teile einer Bremseinrichtung gemäß einem zweiten Ausführungsbeispiel der Erfindung in vereinfachter perspektivischer Darstellung teilweise in einer Schnittdarstellung;
- Fig. 3: die Teile der Bremseinrichtung von Fig. 2 gemäß dem zweiten Ausführungsbeispiel in vereinfachter perspektivischer Darstellung teilweise in einer Halbschnittdarstellung;
- Fig. 4: ausgewählte Teile der Bremseinrichtung gemäß dem zweiten Ausführungsbeispiel von Fig. 2 in vereinfachter perspektivischer Darstellung teilweise in einer Schnittdarstellung;
- Fig. 5: Teile der Bremseinrichtung gemäß dem ersten Ausführungsbeispiel der Erfindung in perspektivischer Darstellung;
- Fig. 6: Teile der Bremseinrichtung gemäß dem ersten Ausführungsbeispiel in einer weiteren Darstellung;
- Fig. 7: eine erste Schnittdarstellung der in Fig. 5 dargestellten Teile der Bremseinrichtung gemäß dem ersten Ausführungsbeispiel;
- Fig. 8: eine zweite Schnittdarstellung der in Fig. 5 dargestellten Teile der Bremseinrichtung gemäß dem ersten Ausführungsbeispiel;
- Fig. 9: eine Seitenansicht der in Fig. 5 dargestellten Teile der Bremseinrichtung gemäß dem ersten Ausführungsbeispiel;
- Fig. 10: eine weitere Ansicht der in Fig. 5 dargestellten Teile der Bremseinrichtung gemäß dem ersten Ausführungsbeispiel;
- Fig. 11: eine schematische Darstellung einer Projektion der Kurbel, des Zapfens und des Ausgleichsexzenters einer Bremseinrichtung gemäß einem dritten Ausführungsbeispiel der Erfindung auf eine senkrecht von der Kurbeldrehachse durchstoßene Projektionsebene in der Neutralposition des Zuspannkörpers;
- Fig. 12: eine der Anordnung gemäß Fig. 11 entsprechende Anordnung in einer ersten Auslenkposition und
- Fig. 13: eine der Anordnung gemäß Fig. 11 entsprechende Anordnung in einer zweiten Auslenkposition.

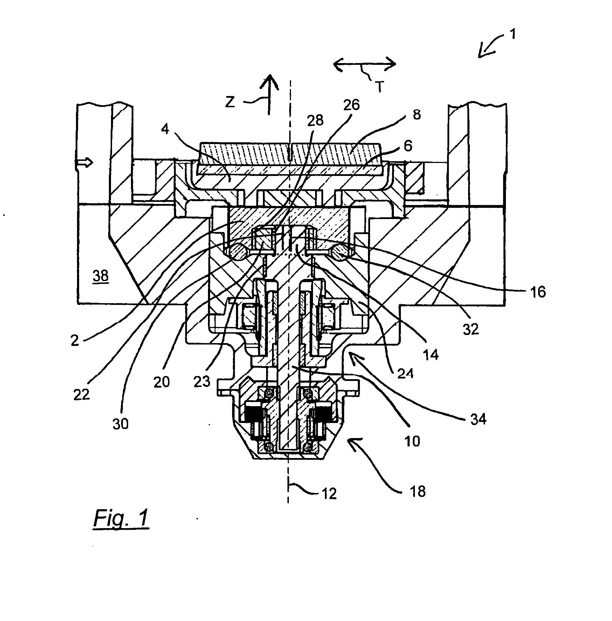

Fig. 1 zeigt eine Bremseinrichtung 1 gemäß einem ersten Ausführungsbeispiel der Erfindung. Die Bremseinrichtung 1 weist einen Zuspannkörper 2 auf, an welchem ein Bremsbelagträger 4 befestigt ist. Der Bremsbelagträger 4 trägt einen auf einer Bremsbelagplatte 6 angeordneten Bremsbelag 8. Mittels des Zuspannkörpers 2 ist der Bremsbelag 8 gegen einen nicht dargestellten Rotationskörper zuspannbar. Die Bremseinrichtung 1 ist als Scheibenbremse ausgebildet, wobei der Rotationskörper eine Bremsscheibe ist. In Erwiderung auf eine Auslenkung des Zuspannkörpers 2 in Richtung einer durch einen Pfeil symbolisierten Zuspannrichtung Z spannt der Bremsbelag 8 gegen die Bremsscheibe zu. Die Bremsscheibe rotiert hierbei um eine Rotationsachse, welche parallel zur Zuspannrichtung Z verläuft.

Die Bremseinrichtung 1 weist eine Kurbel 10 auf, welche um eine Kurbeldrehachse 12 drehbar gelagert ist. Die Kurbel 10 ist stoffschlüssig mit einem Zapfen 14 verbunden, welcher rotationssymmetrisch um eine Zapfenmittelachse 16 ausgebildet ist. Die Zapfenmittelachse 16 ist somit in einem konstanten Abstand parallel und exzentrisch versetzt zur Kurbeldrehachse 12 angeordnet. Ein Aktuator bzw. Elektromotor 18 ist derart angeordnet, dass in Erwiderung auf eine Bestromung des Elektromotors 18 ein Drehmoment der Kurbel 10 erzeugbar ist. Dieses Drehmoment versetzt die Kurbel 10 in eine Drehung um die Kurbeldrehachse 12, was zu einer Positionsänderung des Zapfens 14 bzw. der Zapfenmittelachse 16 führt.

Der Zapfen 14 greift in einen Exzenter bzw. Ausgleichsexzenter 20 ein, welcher um eine Ausgleichsexzenterdrehachse 22 drehbar in den Zuspannkörper 2 gelagert ist.

Die Kurbel 10 ist in einem Abschnitt mittels eines Lagers 23 in einem Widerlager 24 gelagert. Der Zapfen 14 ist wiederum mittels eines Lagers 26 in dem Ausgleichsexzenter 20 gelagert. Der Ausgleichsexzenter 20 ist schließlich mittels eines Lagers 28 in dem Zuspannkörper 2 gelagert. Als Lager 23, 26 und 28 kann bspw. ein Wälzlager vorgesehen sein. Die Ausgleichsexzenterdrehachse 22 ist somit in einem konstanten Abstand parallel und exzentrisch versetzt zur Zapfenmittelachse 16 angeordnet.

In Erwiderung auf das Drehmoment der Kurbel 10 ist mittels des Zapfens 14 und des Ausgleichsexzenters 20 eine Betätigungskraft zum Zuspannen des Bremsbelags 8 bereitstellbar. Bei einer Drehung der Kurbel 10 um die Kurbeldrehachse 12 wird die Zapfenmittelachse 16 um die Kurbeldrehachse 12 verschwenkt. Die Ausgleichsexzenterdrehachse 20 weist hierbei eine Bewegungskomponente in einer senkrecht zur Zapfenmittelachse 16 bzw. Ausgleichsexzenterdrehachse 22 weisenden Translationsrichtung T auf. Eine zweite Bewegungskomponente weist senkrecht zur Translationsrichtung T und senkrecht zur Exzenterdrehachse 22. Diese zweite Bewegungskomponente wird mittels des Ausgleichsexzenters 20 ausgeglichen. Der Zuspannkörper 2 ist nämlich derart in dem Widerlager 24 gelagert, dass lediglich eine Auslenkung des Zuspannkörpers 2 relativ zu diesem Widerlager 24 in der Translationsrichtung T und in einer Richtung parallel zur Ausgleichsexzenterdrehachse 22 bzw. Zapfenmittelachse 16 bzw. Kurbeldrehachse 12 bzw. zur Zuspannrichtung Z möglich ist. Folglich ist auch die Ausgleichsexzenterdrehachse 22 in der Translationsrichtung T, nicht jedoch in einer Richtung senkrecht zur Translationsrichtung T und senkrecht zur Ausgleichsexzenterdrehachse 22 verschiebbar. Der Ausgleichsexzenter 20 kompensiert eine Auslenkung der Zapfenmittelachse16 senkrecht zur Translationsrichtung T durch ein Verschwenken der Öffnung bzw. des Lochs, in welchem der Zapfen 14 gelagert ist, bzw. durch eine Drehung des Ausgleichsexzenters 20 um die Ausgleichsexzenterdrehachse 22 in einem Drehsinn, welcher dem Drehsinn der Kurbel 10 entgegengesetzt ist.

Eine Drehung der Kurbel 10 führt somit zu einer Auslenkung des Zuspannkörpers 2 in der Translationsrichtung T. Hierbei schiebt sich der Zuspannkörper 2 über zylinderartig ausgebildete Lagerrollen 30 und 32 so dass sich der Zuspannkörper 2 und damit auch der Bremsbelag 8 in der Zuspannrichtung Z verschiebt. Die Lagerrollen 30 und 32 sind ihrerseits in Aussparungen des Widerlagers 24 gelagert, welche eine rampenartige Kontur aufweisen bzw. den zylindrischen Konturen der Lagerrollen 30 und 32 angepasst sind. Die Lagerrollen 30 und 32 können sich hierbei leicht um ihre jeweilige Mittelachse drehen. Der Zuspannkörper 2 weist auf der dem Widerlager zugewandten Seite Aussparungen mit rampenartigen Konturen auf, über welche der Zuspannkörper 2 bei einer Bewegung in der Translationsrichtung T mit den Lagerrollen 30 und 32 in Kontakt tritt und über diese Lagerrollen 30 und 32 in der Zuspannrichtung Z verschoben wird.

Für eine Verschleißnachstellung weist die Bremseinrichtung 1 eine Nachstelleinrichtung 34 auf. Diese Nachstelleinrichtung 34 weist ihrerseits ein Nachstellmittel 36 auf, welches ein Verschieben des Widerlagers 24 in der Zuspannrichtung Z relativ zur Kurbel 10 und/oder relativ zu einem Trägerelement 38 ermöglicht. Die Nachstelleinrichtung 34 ermöglicht somit ein manuelles oder automatisches Positionieren des Bremsbelages 8 in einem optimalen Abstand zur Bremsscheibe. Eine Vergrößerung des Abstandes zwischen dem Bremsbelag 8 und der Bremsscheibe infolge eines Abriebs bzw. Verschleißes des Bremsbelages 8 kann somit durch ein Nachstellen mittels der Nachstelleinrichtung 34 in der Zuspannrichtung Z entgegengewirkt werden. Mittels der Nachstelleinrichtung 34 ist die Position des Bremsbelages 8 immer derart einstellbar bzw. einregelbar, dass sich ein Abstand zwischen dem Bremsbelag 8 und der Bremsscheibe unabhängig von einem Verschleißzustand des Bremsbelages 8 ergibt und somit eine Kraftverstärkung mittels der Anordnung der Kurbel 10 und dem Ausgleichsexzenter 20 unabhängig vom Verschleißzustand in Abhängigkeit von einem Grad der Drehung der Kurbel 10 erfolgt.

Das Lager 23 ist hierfür derart ausgebildet, dass ein Verschieben des Widerlagers 24 relativ zur Kurbel 10 in einer Richtung parallel zur Kurbeldrehachse 12 möglich ist. Zudem ist wenigstens eines der Lager 26 und 27 derart ausgebildet, dass ein Verschieben des Ausgleichsexzenters 20 relativ zu dem Zuspannkörper 2 bzw. relativ zu dem Zapfen 14 bzw. der Kurbel 10 in der Zuspannrichtung Z möglich ist.

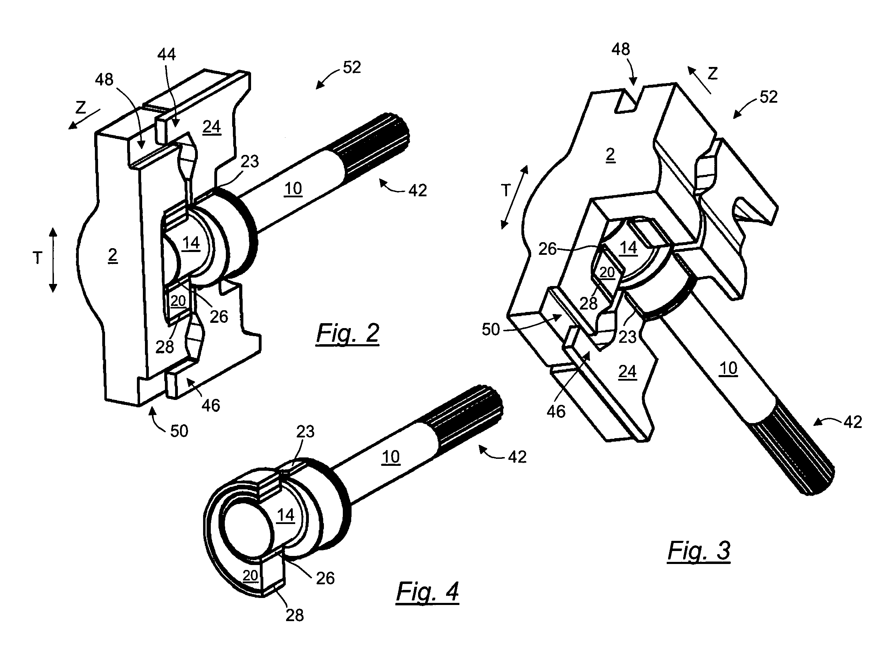

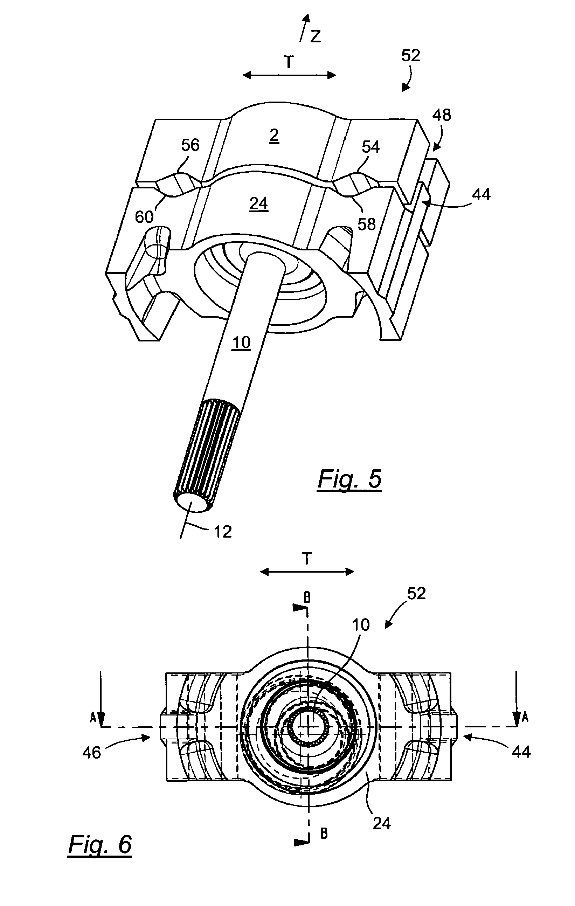

Fig. 2, Fig. 3 und Fig. 4 zeigen Teile der Bremseinrichtung 1 gemäß einem zweiten Ausführungsbeispiel. Gleiche Bezugszeichen bezeichnen gleiche oder ähnliche Teile. Insbesondere zeigen die Fig. 5 bis 7 die Kurbel 10, den Zapfen 14 und den Ausgleichsexzenter 20 nebst den Lagern 23, 26 und 28. Die Kurbel 10 ist zumindest in einem von dem Lager 23 gelagerten Abschnitt zylinderartig ausgebildet. Auch das Lager 23 selbst sowie die Lager 26 und 28 sind zylinderartig ausgebildet und lagern den ebenfalls zylinderartig ausgebildeten Zapfen 14 und den ein zylinderartiges Loch aufweisenden und in seinem Umfang ebenfalls zylinderartig ausgebildeten Ausgleichsexzenter 20. Die Kurbel 10 weist darüber hinaus eine zahnradartige Ausbildung 42 auf, welche Angriffsflächen zur Erzeugung des Drehmoments der Kurbel 10 bereitstellt.

Die Fig. 2 und 3 zeigen darüber hinaus das Widerlager 24 und den Zuspannkörper 2, wobei führungsschienenartige Abschnitte 44 und 46 des Widerlagers 24 den Zuspannkörper 2 derart führbar lagern, dass eine Bewegung des Zuspannkörpers 2 relativ zu dem Widerlager 24 lediglich in der Translationsrichtung T und in der Zuspannrichtung Z möglich ist. Hierfür weist der Zuspannkörper 2 Aussparungen 48 und 50 auf, in welche die führungsartigen Abschnitte 44 und 46 eingreifen. In einer dargestellten Mittelposition 52 ist hierbei der führungsschienenartige Abschnitt 44 in der Translationsrichtung T von dem Zuspannkörper 2 beabstandet. Entsprechend ist in der Mittelposition 52 der führungsschienenartige Abschnitt 46 in der Translationsrichtung T von dem Zuspannkörper 2 beabstandet.

Fig. 5, Fig. 6, Fig. 7, Fig. 8, Fig. 9 und Fig. 10 zeigen verschiedene Ansichten von Teilen der Bremsvorrichtung 1 gemäß dem ersten Ausführungsbeispiel von Fig. 1.

Fig. 5 zeigt dabei die Kurbel 10 mit der zahnradartigen Ausbildung 42, das Widerlager 24 mit dem führungsschienenartigen Abschnitt 44, den Zuspannkörper 2 mit der Aussparung 48, in welche der führungsschienenartige Abschnitt 44 eingreift, sowie die bereits genannten und noch nicht bezeichneten Aussparungen 54 und 56 mit den rampenartigen Konturen in dem Zuspannkörper 2 und die ebenfalls bereits genannten und noch nicht bezeichneten Aussparungen 58 und 60 in dem Widerlager 24, welche in der dargestellten Neutralposition 52 korrespondierend zu der Aussparung 54 bzw. 56 ausgerichtet sind. Die Konturen der Aussparungen 54, 56, 58 und 60 erstrecken sich in dem Zuspannkörper 2 bzw. in dem Widerlager 24 in der Translationsrichtung T, wobei eine Tiefe der Kontur in einer Richtung parallel zur Kurbeldrehachse 12 über die Translationsrichtung T variiert. Die Konturen der Aussparungen 54, 56, 58 und 60 weisen jedoch einen linearen Verlauf in einer Richtung senkrecht zur Translationsrichtung T und senkrecht zur Kurbeldrehachse 12 auf.

Das Widerlager 24 ist über seine äußeren Flächen in dem Bremssattel bzw. Trägerelement 38 derart führbar, dass einer Rotation des Widerlagers 24 um die Kurbeldrehachse 12 relativ zu dem Bremssattel bzw. Trägerelement 38 entgegengewirkt wird, ein Verschieben des Widerlagers 24 in der Zuspannrichtung Z relativ zu dem Bremssattel bzw. Trägerelement 38 jedoch möglich ist.

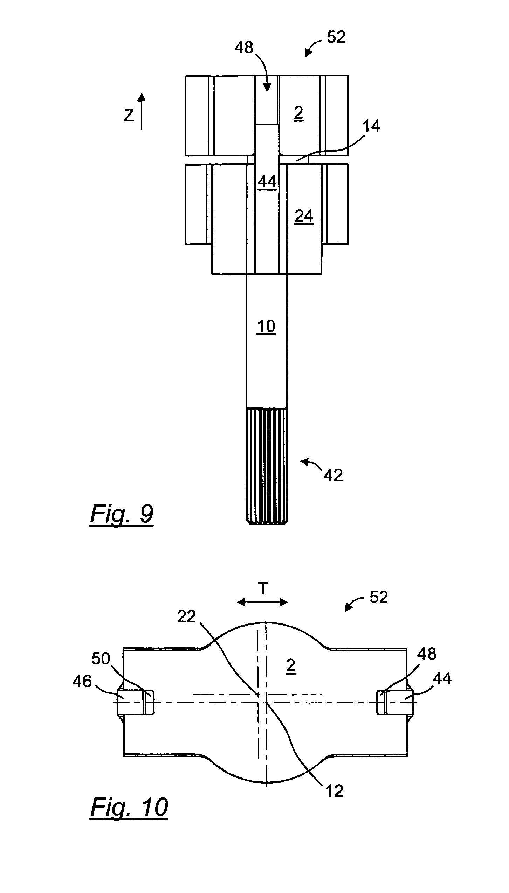

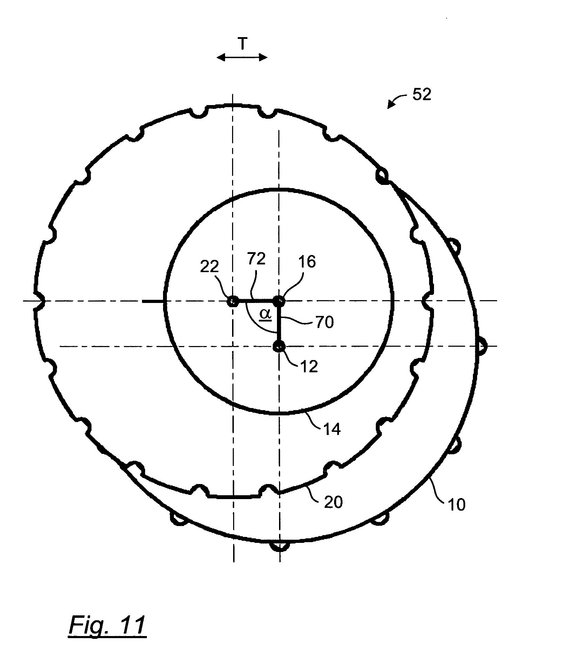

Fig. 6 zeigt eine Ansicht der in Fig. 5 dargestellten Teile der Vorrichtung 1 in der Zuspannrichtung Z, wobei der nicht dargestellte Bremsbelag 8 im Hintergrund anzuordnen wäre. Die mit A-A und B-B gekennzeichneten Schnitte sind in den Fig. 10 und 11 dargestellt.

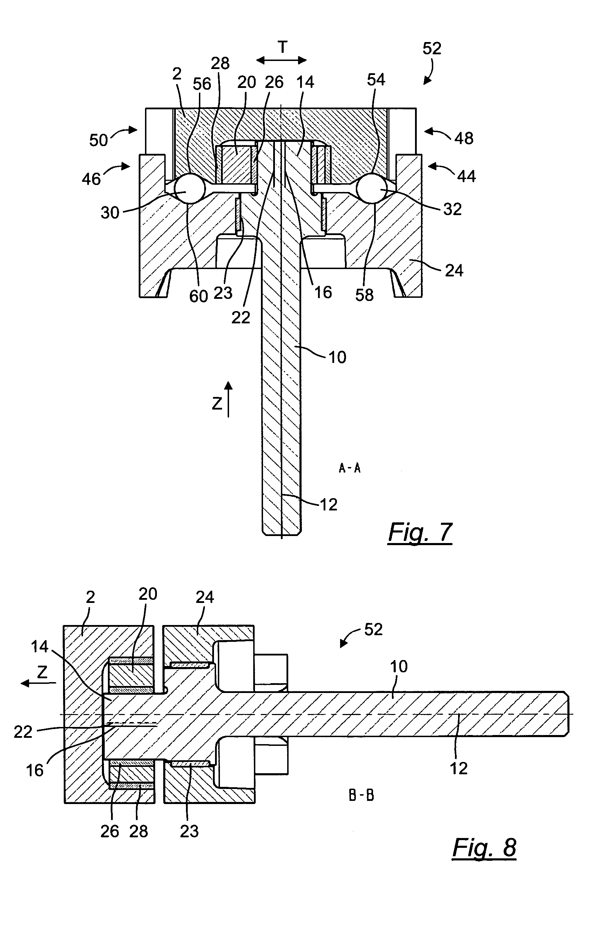

Fig. 7 zeigt den Schnitt A-A gemäß den Markierungen in Fig. 6. Zusätzlich dargestellt sind hierbei die Lagerrollen 30 und 32, wobei die Lagerrolle 30 zwischen den Aussparungen 56 und 60 und die Lagerrolle 32 zwischen den Aussparungen 54 und 58 angeordnet ist. Dargestellt sind ferner der Zapfen 14, der Ausgleichsexzenter 20 und die Lager 23, 26 und 28. Die Ausgleichsexzenterdrehachse 22 ist in der Translationsrichtung T weiter von der Kurbeldrehachse 12 beabstandet als die Zapfenmittelachse 16.

Fig. 8 zeigt den in Fig. 6 mit B-B gekennzeichneten Schnitt. In einer Richtung senkrecht zur Translationsrichtung T und senkrecht zur Kurbeldrehachse 12 bzw. zur Zuspannrichtung Z ist die Kurbeldrehachse 12 weiter von der Zapfenmittelachse 16 beabstandet als die Ausgleichsexzenterdrehachse 22.

Fig. 9 zeigt eine Ansicht der Teile der Vorrichtung 1 in Gegenrichtung zur der Ansicht von Fig. 8.

Fig. 10 zeigt eine Ansicht in Gegenrichtung zur Zuspannrichtung Z. Ersichtlich ist hier die Führung der führungsschienenartigen Abschnitte 44 und 46 des Widerlagers 24 in den Aussparungen 48 und 50 des Zuspannkörpers 2. Ferner sind durch Kreuzungspunkte jeweils zweier Geraden die Kurbeldrehachse 12 und die Ausgleichsexzenterdrehachse 22 angedeutet. Eine Drehung der Kurbel 10 um die Kurbeldrehachse 12 führt zu einem Verschieben des Zuspannkörpers 2 in der Translationsrichtung T relativ zu dem Widerlager 24 bzw. relativ zu den führungsschienenartigen Abschnitten 44 und 46 des Widerlagers 24.

Fig. 11, Fig. 12 und Fig. 13 zeigen schematisch die Kurbel 10, den Zapfen 14 und den Ausgleichsexzenter 20 in einer Anordnung gemäß einem dritten Ausführungsbeispiel der Erfindung. Zur Veranschaulichung der Positionen der Kurbel 10 und des Ausgleichsexzenters 20 insbesondere im Vergleich der Fig. 11, 12 und 13 untereinander sind die Kurbel 10 und der Ausgleichsexzenter 20 mit bei den realen Bauteilen nicht vorhandenen halbkreisartigen Aussparungen bzw. Ausstülpungen dargestellt.

Fig. 11 zeigt hierbei die Anordnung der Kurbel 10, des Zapfens 14 und des Ausgleichsexzenters 20 in der Mittelposition 52. Eine erste Verbindungsstrecke 70 ist senkrecht zur Zapfenmittelachse 16 und senkrecht zur Kurbeldrehachse 12 angeordnet und erstreckt sich von der Kurbeldrehachse 12 bis zu einem Zapfenmittelpunkt 71 auf der Zapfenmittelachse 16. Eine zweite Verbindungsstrecke 72 ist senkrecht zur Zapfenmittelachse 16 und senkrecht zur Ausgleichsexzenterdrehachse 22 angeordnet und erstreckt sich von dem Zapfenmittelpunkt 71 bis zur Ausgleichsexzenterdrehachse 22. Die erste Verbindungsstrecke 70 und die zweite Verbindungsstrecke 72 weisen eine gleiche Länge auf. In der dargestellten Mittelposition 52 des Zuspannkörpers 2 ist der Bremsbelag 8 nicht bzw. minimal zuspannbar. Die erste Verbindungsstrecke 70 und die zweite Verbindungsstrecke 72 begrenzen im Zapfenmittelpunkt 71 bzw. in dem Schnittpunkt der Zapfenmittelachse 16 mit der Projektionsebene einen Öffnungswinkel α, welcher in der Mittelposition 52 ein rechter Winkel ist. Alternativ kann der Öffnungswinkel α in der Mittelposition 52 jedoch auch bspw. bis zu 10° oder 20° von einem rechten Winkel abweichen.

Die erste Verbindungsstrecke 70 ist senkrecht zur Kurbeldrehachse 12 und senkrecht zur Translationsrichtung T angeordnet. Die zweite Verbindungsstrecke 72 ist parallel zur Translationsrichtung T und senkrecht zur Kurbeldrehachse 12 bzw. zur Zapfenmittelachse 16 bzw. zur Ausgleichsexzenterdrehachse 22 angeordnet.

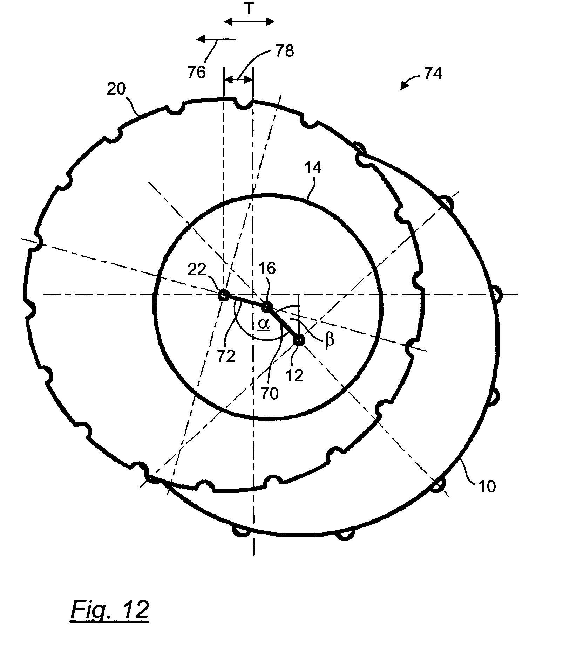

Fig. 12 zeigt die Anordnung gemäß Fig. 11 in einer von der Mittelposition 52 des Zuspannkörpers 2 beabstandeten ersten Auslenkposition 74. Die Position der Kurbeldrehachse 12 ist unverändert zur Position dieser Kurbeldrehachse 12 in der Mittelposition des Zuspannkörpers gemäß Fig. 11. Im Vergleich zur Anordnung gemäß Fig. 11 ist die Kurbel 10 in der Anordnung gemäß Fig. 12 jedoch um einen Drehwinkel β um die Kurbeldrehachse 12 verdreht. Entsprechend ist die Zapfenmittelachse 16 um diesen Winkel β um die Kurbeldrehachse 12 verschwenkt.

Da die erste Verbindungsstrecke 70 und die zweite Verbindungsstrecke 72 vorgegebene Längen aufweisen und im Zapfenmittelpunkt 71 bzw. der Zapfenmittelachse 16 zusammentreffen, muss die Lage der Ausgleichsexzenterdrehachse 22 in der ersten Auslenkposition 74 gegenüber der Mittelposition 52 verändert sein. Die Ausgleichsexzenterdrehachse 22 ist in der Translationsrichtung mit einer ersten Orientierung 76 um eine erste Auslenkstrecke 78 gegenüber der Lage der Ausgleichsexzenterdrehachse 22 in der Mittelposition 52 verschoben. Ein Verschieben senkrecht zur Translationsrichtung T und senkrecht zur Kurbeldrehachse 12 ist aufgrund der baulichen Ausgestaltung der Bremseinrichtung 1 nicht möglich.

Im Falle der in einem Drehsinn um den Winkel β um die Kurbeldrehachse 12 verschwenkten Zapfenmittelachse 16 ist diese Zapfenmittelachse 16 in entgegengesetztem Drehsinn um den Winkel a-β-90° um die Ausgleichsexzenterdrehachse 22 verschwenkt.

Die erste Verbindungsstrecke 70 und die zweite Verbindungsstrecke 72 begrenzen im Zapfenmittelpunkt 71 den Öffnungswinkel α, welcher in der ersten Auslenkposition 74 ein stumpfer Winkel ist. Der Öffnungswinkel α kann jedoch alternativ bis zu 180° betragen und somit im Extremfall auch ein gestreckter Winkel sein.

In der ersten Auslenkposition 74 ist der Bremsbelag maximal zuspannbar. Eine Änderung der ersten Auslenkposition 74 bzw. eine Änderung der Länge der ersten Auslenkstrecke 78 bzw. des maximalen Öffnungswinkels α kann mittels der Nachstelleinrichtung 34 bewirkt werden oder sich aus einem Verschleiß des Bremsbelags 8 ergeben. Die Nachstelleinrichtung 34 kompensiert im Idealfall derartige Änderungen, welche aufgrund eines Verschleißes des Bremsbelags 8 auftreten.

Die erste Auslenkposition 74 wird vornehmlich zum Abbremsen eines Fahrzeugs, welches sich in einer Vorwärtsrichtung bewegt, verwendet, da sich hierbei mittels der ersten Verbindungsstrecke 70, der zweiten Verbindungsstrecke 72 und des Öffnungswinkels α in vorteilhafter Weise ein "Kniehebeleffekt" ergibt, welcher eine vorteilhafte Kraftuntersetzung ermöglicht.

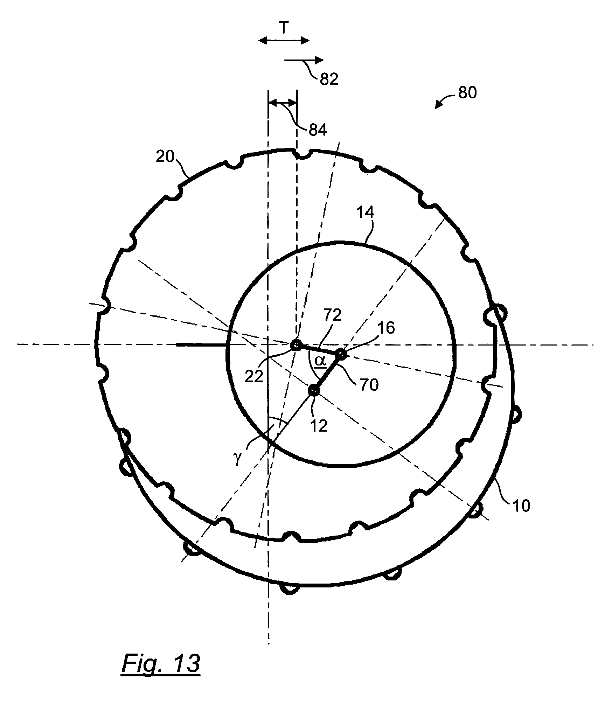

Fig. 13 zeigt eine Anordnung entsprechend den Fig. 11 und 12 im Falle einer Auslenkung des Zuspannkörpers 2 in einer zweiten Auslenkposition 80. Der Zuspannkörper 2 ist gegenüber der Mittelposition 52 in der Translationsrichtung T mit einer zweiten Orientierung 82 um eine zweite Auslenkstrecke 84 verschoben. Ausgehend von der Mittelposition 52 wird dies durch eine Drehung der Kurbel 10 um die Kurbeldrehachse 12 um einen Drehwinkel γ erreicht. In der zweiten Auslenkposition 80 ist folglich gegenüber der Mittelposition 52 des Zuspannkörpers 2 die Zapfenmittelachse 16 bzw. der Zapfenmittelpunkt 71 mit dem Drehwinkel γ um die Kurbeldrehachse 12 verschwenkt. Der Öffnungswinkel α ist in der zweiten Auslenkposition 80 ein spitzer Winkel. Die Zapfenmittelachse 16 bzw. der Zapfenmittelpunkt 71 ist um einen Winkel α+ γ-90° gegenüber der Position dieser Zapfenmittelachse 16 bzw. des Zapfenmittelpunkts 71 in der Mittelposition 52 des Zuspannkörpers 2 verschwenkt.

In der zweiten Auslenkposition 80 ist der Bremsbelag 8 maximal gegen einen Rotationskörper bzw. eine Bremsscheibe zuspannbar. Jedoch ergibt sich durch ein Auslenken von der Mittelposition 52 in die zweite Auslenkposition 80 nicht der "Kniehebeleffekt" in analoger Weise zu der Ausrichtung in die erste Auslenkposition 74. Das Zuspannen des Bremsbelags 8 in der zweiten Auslenkposition 80 bzw. bei einer Ausrichtung in Richtung der zweiten Auslenkposition 80 wird deshalb für ein Zuspannen des Bremsbelags 8 in Richtung des Rotationskörpers bzw. in Richtung der Bremsscheibe für ein Abbremsen des Fahrzeugs, welches sich in einer Rückwärtsfahrt befindet, verwendet. Da ein Fahrzeug rückwärts nur mit vergleichsweise geringen Geschwindigkeiten bewegt wird, ist für ein Abbremsen dieses Fahrzeugs in einer Rückwärtsfahrt eine vergleichsweise geringe Betätigungskraft notwendig.

Das Erreichen der ersten Auslenkposition 74 bzw. das Erreichen der zweiten Auslenkposition 80 ausgehend von der Mittelposition 52 wird durch eine selbstverstärkende Bauart der Bremseinrichtung 1 unterstützt. Durch Reibung des Bremsbelags 8 an dem Rotationskörper bzw. an der Bremsscheibe wird der Bremsbelag 8 bzw. der Zuspannkörper 2 entlang der Translationsrichtung T in Richtung der ersten Auslenkposition 74 bzw. in Richtung der zweiten Auslenkposition 80 gedrückt. Über das Widerlager 24 bzw. Lagerrollen 30 und 32 drückt der Zuspannkörper 2 in Erwiderung hierauf weiter in der Zuspannrichtung Z bzw. in Richtung des Rotationskörpers bzw. der Bremsscheibe.

Die Erfindung ermöglicht eine vorteilhafte Kraftübertragung von dem Zapfen 14 auf den Zuspannkörper 2, in dem sie den Zapfen 14 in einer exzentrisch zur Ausgleichsexzenterdrehachse 22 angeordneten Öffnung im Ausgleichsexzenter 20 lagert. Aufgrund der zylindrischen Ausbildung der Öffnung und der zylindrischen Ausbildung des Zapfens 14 zumindest in dem Bereich, welcher in diese Öffnung eingreift, kann das zylindrische Lager 26 zur Lagerung des Zapfens 14 in dem Ausgleichsexzenter 20 verwendet werden. Dieses Lager 26 ist kostengünstig herstellbar und widerstandsfähig gegen ein Angreifen großer Kräfte.

Auch der Ausgleichsexzenter 20 selbst ist vorteilhaft in dem Lager 28 gelagert, welches in seiner Bauart dem Lager 26 entsprechen kann. Der Ausgleichsexzenter 20 ist nämlich ebenfalls zylindrisch ausgebildet und mittels des Lagers 28 in einer zylindrischen Öffnung in dem Zuspannkörper 2 gelagert. Darüber hinaus ermöglicht die erfindungsgemäße Bremseinrichtung 1 eine vorteilhafte Untersetzung beim Zuspannen des Bremsbelags 8 mittels eines "Kniehebeleffekts". Insgesamt sind somit mittels der erfindungsgemäßen Bremseinrichtung 1 Kräfte zum Zuspannen des Bremsbelags gegen den Rotationskörper bzw. die Bremsscheibe in vorteilhafter Weise bereitstellbar.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Bremseinrichtung mit einem Zuspannkörper (2), mittels welchem ein Bremsbelag (8) gegen einen Rotationskörper, insbesondere Bremsscheibe, zuspannbar ist,
mit einer Kurbel (10), welche um eine Kurbeldrehachse (12) drehbar gelagert ist, mit einem Zapfen (14), welcher zumindest abschnittsweise rotationssymmetrisch um eine Zapfenmittelachse (16) ausgebildet ist,
wobei die Zapfenmittelachse (16) in einem konstanten Abstand parallel und exzentrisch versetzt zur Kurbeldrehachse (12) angeordnet ist,
und mit einem Aktuator (18), mittels dessen ein Drehmoment der Kurbel (10) erzeugbar ist, wobei in Erwiderung auf dieses Drehmoment mittels des Zapfens (14) eine Betätigungskraft zum Zuspannen des Bremsbelags (8) bereitstellbar ist, **gekennzeichnet durch**
einen Ausgleichsexzenter (20), welcher um eine Ausgleichsexzenterdrehachse (22) drehbar in dem Zuspannkörper (2) gelagert ist, wobei diese Ausgleichsexzenterdrehachse (22) in einem konstanten Abstand parallel und exzentrisch versetzt zur Zapfenmittelachse (16) angeordnet ist, wobei der Ausgleichsexzenter (20) ein exzentrisch zur Ausgleichsexzenterdrehachse (22) angeordnetes und rotationssymmetrisch um die Zapfenmittelachse (16) ausgebildetes Loch oder Sackloch aufweist und der Zapfen (14) um die Zapfenmittelachse (16) gegenüber dem Ausgleichsexzenter (20) drehbar in diesem Loch bzw. Sackloch gelagert ist, wobei der Zapfen (14) ggf., insbesondere stoffschlüssig, mit der Kurbel (10) verbunden ist.

2. Bremseinrichtung mit einem Zuspannkörper (2), mittels welchem ein Bremsbelag (8) gegen einen Rotationskörper, insbesondere Bremsscheibe, zuspannbar ist,
mit einer Kurbel (10), welche um eine Kurbeldrehachse (12) drehbar gelagert ist, mit einem Zapfen (14), welcher zumindest abschnittsweise rotationssymmetrisch um eine Zapfenmittelachse (16) ausgebildet ist,
wobei die Zapfenmittelachse (16) in einem konstanten Abstand parallel und exzentrisch versetzt zur Kurbeldrehachse (12) angeordnet ist,
und mit einem Aktuator (18), mittels dessen ein Drehmoment der Kurbel (10) erzeugbar ist, wobei in Erwiderung auf dieses Drehmoment mittels des Zapfens (14) eine Betätigungskraft zum Zuspannen des Bremsbelags (8) bereitstellbar ist, **gekennzeichnet durch**
einen Ausgleichsexzenter (20), welcher um eine Ausgleichsexzenterdrehachse (22) drehbar in dem Zuspannkörper (2) gelagert ist, wobei diese Ausgleichsexzenterdrehachse (22) in einem konstanten Abstand parallel und exzentrisch versetzt zur Zapfenmittelachse (16) angeordnet ist, wobei die Kurbel (10) ein exzentrisch zur Kurbeldrehachse (12) angeordnetes und rotationssymmetrisch um die Zapfenmittelachse (16) ausgebildetes Loch oder Sackloch aufweist und der Zapfen (14) um die Zapfenmittelachse (16) gegenüber der Kurbel (12) drehbar in diesem Loch bzw. Sackloch gelagert ist, wobei der Zapfen (14) ggf., insbesondere stoffschlüssig, mit dem Ausgleichsexzenter (20) verbunden ist.

3. Bremseinrichtung nach Anspruch 1 oder 2,
**dadurch gekennzeichnet, dass**
der Ausgleichsexzenter (20) derart in dem Zuspannkörper (2) gelagert ist, dass eine Auslenkung dieses Zuspannkörpers (2) in einer senkrecht zur Ausgleichsexzenterdrehachse (22) weisenden Translationsrichtung (T) mit einer betragsgleichen, richtungsgleichen und orientierungsgleichen Auslenkung der Ausgleichsexzenterdrehachse (22) einhergeht.

4. Bremseinrichtung nach einem der vorherigen Ansprüche,
**dadurch gekennzeichnet,**
**dass** die Kurbel (10), der Zapfen (14) und/oder der Ausgleichsexzenter (20) jeweils zumindest abschnittsweise eine zylinderartige Kontur aufweisen und jeweils in einem Lager (23, 26, 28) gelagert sind, welches eine korrespondierende zylinderartige Kontur aufweist.

5. Bremseinrichtung nach einem der vorherigen Ansprüche,
**dadurch gekennzeichnet, dass**
eine erste Verbindungsstrecke (70), welche senkrecht zur Zapfenmittelachse (16) angeordnet ist und einen auf der Zapfenmittelachse (16) angeordneten Zapfenmittelpunkt (71) mit der Kurbeldrehachse (12) verbindet, zwischen 80 Prozent und 125 Prozent der Länge einer zweiten Verbindungsstrecke (72), welche senkrecht zur Zapfenmittelachse (16) angeordnet ist und den Zapfenmittelpunkt (71) mit der Ausgleichsexzenterdrehachse (22) verbindet, aufweist, insbesondere die erste Verbindungsstrecke (70) und die zweite Verbindungsstrecke (72) eine im Wesentlichen gleiche Länge aufweisen.

6. Bremseinrichtung nach Anspruch 5,
**gekennzeichnet durch**
eine Anordnung der Kurbel (10), des Zapfens (14) und des Ausgleichsexzenters (20) derart, dass der Bremsbelag (8) in einer ersten Auslenkposition (78) des Zuspannkörpers (2) maximal zuspannbar ist, wobei die erste Verbindungsstrecke (70) und die zweite Verbindungsstrecke (72) im Zapfenmittelpunkt (71) einen stumpfen oder gestreckten Öffnungswinkel (α), insbesondere zwischen 150° und 180°, bevorzugt zwischen 170° und 180° und besonders bevorzugt von im Wesentlichen 180°, begrenzen.

7. Bremseinrichtung nach einem der Ansprüche 5 oder 6,
**gekennzeichnet durch**
eine Anordnung der Kurbel (10), des Zapfens (14) und des Ausgleichsexzenters (20) derart, dass der Zuspannkörper (2) bezogen auf eigene Auslenkungen in einer bzw. der senkrecht zur Ausgleichsexzenterdrehachse (22) weisenden Translationsrichtung (T) eine Mittelposition (52) aufweist, in welcher der Bremsbelag (8) nicht bzw. minimal zuspannbar ist, wobei die erste Verbindungsstrecke (70) und die zweite Verbindungsstrecke (72) im Zapfenmittelpunkt (71) einen im Wesentlichen rechten Öffnungswinkel (α) begrenzen, wobei die erste Verbindungsstrecke (70) im Wesentlichen senkrecht zur Translationsrichtung (T) und im Wesentlichen senkrecht zur Kurbeldrehachse (12) angeordnet ist und wobei die zweite Verbindungsstrecke (72) im Wesentlichen parallel zur Translationsrichtung (T) und senkrecht zur Kurbeldrehachse (12) angeordnet ist.

8. Bremseinrichtung nach Anspruch 7
**gekennzeichnet durch**
eine Anordnung der Kurbel (10), des Zapfens (14) und des Ausgleichsexzenters (20) derart, dass der Bremsbelag (8) in einer zweiten Auslenkposition (80) des Zuspannkörpers (2) maximal zuspannbar ist, wobei die erste Verbindungsstrecke (70) und die zweite Verbindungsstrecke (72) im Zapfenmittelpunkt (71) einen spitzen Öffnungswinkel (α), insbesondere zwischen 50° und 80° begrenzen und wobei die erste Auslenkposition (78) **durch** Auslenkung mit einer ersten Orientierung (76) und die zweite Auslenkposition (80) **durch** Auslenkung mit einer der ersten Orientierung 76 entgegengesetzten zweiten Orientierung (82) von der Mittelposition (52) entlang der Translationsrichtung (T) erreichbar sind.

9. Bremseinrichtung nach einem der vorherigen Ansprüche,
**gekennzeichnet durch**
wenigstens ein Widerlager (24) und wenigstens eine Ausnehmung (54, 56) mit einer rampenartigen Kontur auf einer dem Widerlager (24) zugewandten Seite des Zuspannkörpers (2), wobei das Widerlager (24) und die Ausnehmung (54, 56) derart angeordnet sind, dass in Erwiderung auf eine Auslenkung des Zuspannkörpers (2) in einer bzw. der senkrecht zur Ausgleichsexzenterdrehachse (22) weisenden Translationsrichtung (T) ausgehend von der bzw. einer Mittelposition (52) eine Auslenkung dieses Zuspannkörpers (2) in einer Richtung parallel zur Ausgleichsexzenterdrehachse (22) herbeigeführt wird, wobei sich der Zuspannkörper (2) mit der Ausnehmung (54, 56) über das Widerlager (24) schiebt und der Bremsbelag (8) gegen den Rotationskörper zuspannbar ist.

10. Bremseinrichtung nach Anspruch 9,
**dadurch gekennzeichnet, dass**
das Widerlager (24) wenigstens eine Lagerkugel oder Lagerrolle (30, 32) aufweist, welche auf einer dem Zuspannkörper (2) abgewandten Seite der Lagerkugel bzw. Lagerrolle (30, 32) in einer weiteren Aussparung (58, 60) mit einer weiteren rampenartigen, insbesondere der Kontur der Lagerkugel bzw. Lagerrolle (30, 32) angepassten, Kontur gelagert ist.

11. Bremseinrichtung nach einem der Ansprüche 9 oder 10,
**gekennzeichnet durch**
eine Nachstelleinrichtung (34), welche wenigstens ein Nachstellmittel (36) aufweist, mittels dessen das Widerlager (24) relativ zur Kurbel (10) in einer parallel zur Kurbeldrehachse (12) weisenden Richtung verschiebbar ist.

12. Bremseinrichtung nach einem der vorherigen Ansprüche,
**gekennzeichnet durch**
eine vom Aktuator (18), insbesondere Elektromotor, antreibbare Antriebswelle, mittels der direkt oder über ein zwischengeschaltetes Untersetzungsgetriebe die Kurbel (10) antreibbar bzw. das Drehmoment der Kurbel (10) erzeugbar ist.

## Claims

1. Braking device having an application body (2), by means of which a brake lining (8) can be applied against a rotational body, in particular a brake disc, having a crank (10) which is mounted rotatably about a crank rotational axis (12), having a pin (14) which is configured at least in sections so as to be rotationally symmetrical about a pin centre axis (16), the pin centre axis (16) being arranged at a constant spacing from, parallel to and eccentrically offset with respect to the crank rotational axis (12), and having an actuator (18), by means of which a torque of the crank (10) can be produced, it being possible for an actuating force for applying the brake lining (8) to be provided by means of the pin (14) in response to the said torque, **characterized by** a compensating eccentric (20) which is mounted in the application body (2) such that it can be rotated about a compensating eccentric rotational axis (22), the said compensating eccentric rotational axis (22) being arranged at a constant spacing from, parallel to and eccentrically offset with respect to the pin centre axis (16), the compensating eccentric (20) having a hole or blind hole which is arranged eccentrically with respect to the compensating eccentric rotational axis (22) and is of rotationally symmetrical configuration about the pin centre axis (16), and the pin (14) being mounted in the said hole or blind hole such that it can be rotated about the pin centre axis (16) with respect to the compensating eccentric (20), the pin (14) optionally being connected to the crank (10), in particular in an integrally joined manner.

2. Braking device having an application body (2), by means of which a brake lining (8) can be applied against a rotational body, in particular a brake disc, having a crank (10) which is mounted rotatably about a crank rotational axis (12), having a pin (14) which is configured at least in sections so as to be rotationally symmetrical about a pin centre axis (16), the pin centre axis (16) being arranged at a constant spacing from, parallel to and eccentrically offset with respect to the crank rotational axis (12), and having an actuator (18), by means of which a torque of the crank (10) can be produced, it being possible for an actuating force for applying the brake lining (8) to be provided by means of the pin (14) in response to the said torque, **characterized by** a compensating eccentric (20) which is mounted in the application body (2) such that it can be rotated about a compensating eccentric rotational axis (22), the said compensating eccentric rotational axis (22) being arranged at a constant spacing from, parallel to and eccentrically offset with respect to the pin centre axis (16), the crank (10) having a hole or blind hole which is arranged eccentrically with respect to the crank rotational axis (12) and is of rotationally symmetrical configuration about the pin centre axis (16), and the pin (14) being mounted in the said hole or blind hole such that it can be rotated about the pin centre axis (16) with respect to the crank (12), the pin (14) optionally being connected to the compensating eccentric (20), in particular in an integrally joined manner.

3. Braking device according to Claim 1 or 2, **characterized in that** the compensating eccentric (20) is mounted in the application body (2) in such a way that a deflection of the said application body (2) in a translational direction (T) which points perpendicularly with respect to the compensating eccentric rotational axis (22) is accompanied by a deflection of the compensating eccentric rotational axis (22) of identical magnitude, identical direction and identical orientation.

4. Braking device according to one of the preceding claims, **characterized in that** the crank (10), the pin (14) and/or the compensating eccentric (20) have/has a cylindrical contour in each case at least in sections and are/is mounted in each case in a bearing (23, 26, 28) which has a corresponding cylindrical contour.

5. Braking device according to one of the preceding claims, **characterized in that** a first connecting section (70) which is arranged perpendicularly with respect to the pin centre axis (16) and connects a pin centre point (71) which is arranged on the pin centre axis (16) to the crank rotational axis (12) is between 80% and 125% of the length of the second connecting section (72) which is arranged perpendicularly with respect to the pin centre axis (16) and connects the pin centre point (71) to the compensating eccentric rotational axis (22), in particular the first connecting section (70) and the second connecting section (72) are of substantially identical length.

6. Braking device according to Claim 5, **characterized by** an arrangement of the crank (10), the pin (14) and the compensating eccentric (20) in such a way that the brake lining (8) can be applied to a maximum extent in a first deflecting position (78) of the application body (2), the first connecting section (70) and the second connecting section (72) delimiting, at the pin centre point (71), an obtuse or straight opening angle (α), in particular between 150° and 180°, preferably between 170° and 180°, and particularly preferably of substantially 180°.

7. Braking device according to either of Claims 5 and 6, **characterized by** an arrangement of the crank (10), the pin (14) and the compensating eccentric (20) in such a way that the application body (2) has a middle position (52) in relation to its own deflections in a or the translational direction (T) which points perpendicularly with respect to the compensating eccentric rotational axis (22), in which middle position (52) the brake lining (8) cannot be applied or can be applied to a minimum extent, the first connecting section (70) and the second connecting section (72) delimiting a substantially right-angled opening angle (α) at the pin centre point (71), the first connecting section (70) being arranged substantially perpendicularly with respect to the translational direction (T) and substantially perpendicularly with respect to the crank rotational axis (12), and the second connecting section (72) being arranged substantially parallel to the translational direction (T) and perpendicularly with respect to the crank rotational axis (12).

8. Braking device according to Claim 7, **characterized by** an arrangement of the crank (10), the pin (14) and the compensating eccentric (20) in such a way that the brake lining (8) can be applied to a maximum extent in a second deflecting position (80) of the application body (2), the first connecting section (70) and the second connecting section (72) delimiting an acute opening angle (α) at the pin centre point (71), in particular between 50° and 80°, and it being possible for the first deflecting position (78) to be achieved by way of deflection from the middle position (52) along the translational direction (T) with a first orientation (76) and for the second deflecting position (80) to be achieved by way of deflection from the middle position (52) along the translational direction (T) with a second orientation (82) which is opposed to the first orientation (76).

9. Braking device according to one of the preceding claims, **characterized by** at least one abutment (24) and at least one recess (54, 56) with a ramp-like contour on a side of the application body (2) which faces the abutment (24), the abutment (24) and the recess (54, 56) being arranged in such a way that, in response to a deflection of the application body (2) in a or the translational direction (T) which points perpendicularly with respect to the compensating eccentric rotational axis (22), starting from the or a middle position (52), a deflection of the said application body (2) is brought about in a direction parallel to the compensating eccentric rotational axis (22), the application body (2) being pushed with the recess (54, 56) over the abutment (24), and it being possible for the brake lining (8) to be applied against the rotational body.

10. Braking device according to Claim 9, **characterized in that** the abutment (24) has at least one bearing ball or bearing roller (30, 32) which is mounted by way of a further ramp-like contour which is adapted, in particular, to the contour of the bearing ball or bearing roller (30, 32) in a further cut-out (58, 60) on a side of the bearing ball or bearing roller (30, 32) which faces away from the application body (2).

11. Braking device according to either of Claims 9 and 10, **characterized by** an adjusting device (34) which has at least one adjusting means (36), by means of which the abutment (24) can be displaced relative to the crank (10) in a direction which points parallel to the crank rotational axis (12).

12. Braking device according to one of the preceding claims, **characterized by** a drive shaft which can be driven by the actuator (18), in particular an electric motor, by means of which drive shaft the crank (10) can be driven or the torque of the crank (10) can be produced directly or via a step-down gear mechanism which is connected in between.

## Revendications

1. Dispositif de freinage avec un corps de serrage (2) à l'aide duquel une garniture de frein (8) peut être serrée contre un corps tournant, notamment un disque de frein, avec un vilebrequin (10) disposé de façon à pouvoir tourner autour d'un axe de rotation de vilebrequin (12), avec un tenon (14) réalisé au moins en partie symétriquement en rotation autour d'un axe central de tenon (16) ;
l'axe central de tenon (16) étant disposé à distance constante, parallèlement et en décalage excentré par rapport à l'axe de rotation de vilebrequin (12) ; et avec un actionneur (18) à l'aide duquel un couple de rotation du vilebrequin (10) peut être produit, une force d'actionnement servant à serrer la garniture de frein (8) pouvant être mise à disposition en réponse à ce couple de rotation à l'aide du tenon (14) ; **caractérisé par** :
un excentre d'équilibrage (20) disposé dans le corps de serrage (2) de façon à pouvoir tourner autour d'un axe de rotation d'excentre d'équilibrage (22), cet axe de rotation d'excentre d'équilibrage (22) étant disposé à distance constante parallèlement et en décalage excentré par rapport l'axe central de tenon (16), l'excentre d'équilibrage (20) comportant un trou ou un trou borgne disposé de façon excentrée par rapport à l'axe de rotation d'excentre d'équilibrage (22) et réalisé symétriquement en rotation autour de l'axe central de tenon (16) et le tenon (14) étant disposé dans ce trou et/ou ce trou borgne de façon à pouvoir tourner autour de l'axe central de tenon (16) par rapport à l'excentre d'équilibrage (20), le tenon (14) étant relié le cas échéant au vilebrequin (10), notamment par complémentarité de matières.

2. Dispositif de freinage avec un corps de serrage (2) à l'aide duquel une garniture de frein (8) peut être serrée contre un corps tournant, notamment un disque de frein, avec un vilebrequin (10) disposé de façon à pouvoir tourner autour d'un axe de rotation de vilebrequin (12), avec un tenon (14) réalisé au moins en partie symétriquement en rotation autour d'un axe central de tenon (16) ;
l'axe central de tenon (16) étant disposé à distance constante parallèlement et en décalage excentré par rapport à l'axe de rotation de vilebrequin (12) ;
et avec un actionneur (18) à l'aide duquel un couple de rotation du vilebrequin (10) peut être produit, une force d'actionnement servant à serrer la garniture de frein (8) pouvant être mise à disposition en réponse à ce couple de rotation à l'aide du tenon (14) ; **caractérisé par** :
un excentre d'équilibrage (20) disposé dans le corps de serrage (2) de façon à pouvoir tourner autour d'un axe de rotation d'excentre d'équilibrage (22), cet axe de rotation d'excentre d'équilibrage (22) étant disposé à distance constante parallèlement et en décalage excentré par rapport l'axe central de tenon (16), le vilebrequin (10) comportant un trou ou un trou borgne disposé de façon excentrée par rapport à l'axe de rotation de vilebrequin (12) et réalisé symétriquement en rotation autour de l'axe central de tenon (16) et le tenon (14) étant disposé dans ce trou et/ou dans ce trou borgne de façon à pouvoir tourner autour de l'axe central de tenon (16) par rapport au vilebrequin (12), le tenon (14) étant relié le cas échéant à l'excentre d'équilibrage (20), notamment par complémentarité de matières.

3. Dispositif de freinage selon la revendication 1 ou 2, **caractérisé en ce que** l'excentre d'équilibrage (20) est disposé de telle sorte dans le corps de serrage (2) qu'une orientation de ce corps de serrage (2) dans une direction de translation (T) orientée perpendiculairement à l'axe de rotation d'excentre d'équilibrage (22) va de pair avec une orientation de même ampleur, de même direction et de même orientation de l'axe de rotation d'excentre d'équilibrage (22).

4. Dispositif de freinage selon l'une quelconque des revendications précédentes, **caractérisé en ce que** le vilebrequin (10), le tenon (14) et/ou l'excentre d'équilibrage (20) comportent respectivement au moins en partie un contour de type cylindrique et qu'ils sont respectivement disposés dans un palier (23, 26, 28) présentant un contour de type cylindrique correspondant.

5. Dispositif de freinage selon l'une quelconque des revendications précédentes, **caractérisé en ce qu'**un premier tronçon de liaison (70) est disposé perpendiculairement à l'axe central de tenon (16) et relie un point central de tenon (71) disposé sur l'axe central de tenon (16) à l'axe de rotation de vilebrequin (12), représentant entre 80 pour cent et 125 pour cent de la longueur d'un deuxième tronçon de liaison (72) disposé perpendiculairement à l'axe central de tenon (16) et reliant le point central de tenon (71) à l'axe de rotation d'excentre d'équilibrage (22), le premier tronçon de liaison (70) et le deuxième tronçon de liaison (72) présentant notamment pour l'essentiel une même longueur.

6. Dispositif de freinage selon la revendication 5, **caractérisé par** un agencement du vilebrequin (10), du tenon (14) et de l'excentre d'équilibrage (20) de telle sorte que la garniture de frein (8) peut être serrée au maximum dans une première position d'orientation (78) du corps de serrage (2), le premier tronçon de liaison (70) et le deuxième tronçon de liaison (72) délimitant dans le point central de tenon (71) un angle d'ouverture (α) obtus ou allongé, notamment compris entre 150° et 180°, de façon préférée entre 170° et 180° et de façon particulièrement préférée d'essentiellement 180°.

7. Dispositif de freinage selon l'une quelconque des revendications 5 ou 6, **caractérisé par** un agencement du vilebrequin (10), du tenon (14) et de l'excentre d'équilibrage (20) de telle sorte que le corps de serrage (2) comporte, par rapport à des orientations propres dans une direction de translation (T) et/ou dans la direction de translation orientée perpendiculairement à l'axe de rotation d'excentre d'équilibrage (22), une position centrale (52) dans laquelle la garniture de frein (8) ne peut être serrée et/ou peut être serrée au minimum, le premier tronçon de liaison (70) et le deuxième tronçon de liaison (72) délimitant dans le point central de tenon (71) un angle d'ouverture (α) pour l'essentiel droit, le premier tronçon de liaison (70) étant disposé pour l'essentiel perpendiculairement à la direction de translation (T) et pour l'essentiel perpendiculairement à l'axe de rotation de vilebrequin (12) et le deuxième tronçon de liaison (72) étant disposé pour l'essentiel parallèlement à la direction de translation (T) et perpendiculairement à l'axe de rotation de vilebrequin (12).

8. Dispositif de freinage selon la revendication 7, **caractérisé par** un agencement du vilebrequin (10), du tenon (14) et de l'excentre d'équilibrage. (20) de telle sorte que la garniture de frein (8) peut être serrée au maximum dans une deuxième position d'orientation (80) du corps de serrage (2), le premier tronçon de liaison (70) et le deuxième tronçon de liaison (72) délimitant dans le point central de tenon (71) un angle d'ouverture (α) aigu, notamment compris entre 50° et 80°, et la première position d'orientation (78) pouvant être atteinte par orientation avec une première orientation (76) et la deuxième position d'orientation (80) pouvant être atteinte par orientation avec une deuxième orientation (82) opposée à la première orientation (76) par rapport à la position centrale (52), le long de la direction de translation (T).

9. Dispositif de freinage selon l'une quelconque des revendications précédentes, **caractérisé par** au moins un contre-palier (24) et au moins un évidement (54, 56) avec un contour de type en rampe sur un côté du corps de serrage (2) orienté vers le contre-palier (24), le contre-palier (24) et l'évidement (54, 56) étant disposés de telle sorte qu'en réponse à une orientation du corps de serrage (2) dans une direction de translation (T) et/ou dans la direction de translation orientée perpendiculairement à l'axe de rotation d'excentre d'équilibrage (22) à partir de la position centrale (52) et/ou d'une position centrale, une orientation de ce corps de serrage (2) est guidée dans une direction s'étendant parallèlement à l'axe de rotation d'excentre d'équilibrage (22), le corps de serrage (2) se poussant avec l'évidement (54, 56) via le contre-palier (24) et permettant de serrer la garniture de frein (8) contre le corps tournant.

10. Dispositif de freinage selon la revendication 9, **caractérisé en ce que** le contre-palier (24) comporte au moins une bille de palier ou un rouleau de palier (30, 32) disposé sur un côté de la bille de palier et/ou du rouleau de palier (30, 32) opposé au corps de serrage (2) dans un évidement (58, 60) supplémentaire, avec un autre contour de type en rampe adapté, notamment au contour de la bille de palier et/ou du rouleau de palier (30, 32).

11. Dispositif de freinage selon l'une quelconque des revendications 9 ou 10, **caractérisé par** un dispositif de rajustement (34) comportant au moins un moyen de rajustement (36) à l'aide duquel le contre-palier (24) peut être déplacé par rapport au vilebrequin (10) dans une direction orientée parallèlement à l'axe de rotation de vilebrequin (12).

12. Dispositif de freinage selon l'une quelconque des revendications précédentes, **caractérisé par** un arbre d'entraînement pouvant être entraîné par l'actionneur (18), notamment le moteur électrique, à l'aide duquel le vilebrequin (10) peut être entraîné directement ou via un rapport de réduction et/ou peut produire le couple de rotation du vilebrequin (10).
